# EUROPEAN PATENT APPLICATION

(11) **EP 4 470 660 A1**
(43) Date of publication of application: **04.12.2024**
(21) Application number: 24178683.9
(22) Date of filing: 29.05.2024
(51) Int. Cl.: B01D 69/10, B01D 69/02, B01D 71/70, B01D 53/22, B01D 69/12

(54) **GAS SEPARATION MEMBRANE**

(30) Priority: 29.05.2023 JP 2023087718
(71) Applicant: Seiko Epson Corporation, Tokyo 160-8801 (JP)
(72) Inventor: TADACHI, Kei, Suwa-shi, 392-8502 (JP); NAKASHIMA, Taisuke, Suwa-shi, 392-8502 (JP)
(74) Representative: Lewis Silkin LLP

(57) **Abstract**

A gas separation membrane for separating carbon dioxide from a mixed gas containing the carbon dioxide and a non-target component includes: a porous layer; and a separation layer formed of a polymer material and in close contact with one surface of the porous layer. A gas selectivity ratio Rcoz/Ro is 8 or more and less than 100, where R₀ is a gas permeability of the non-target component in the gas separation membrane and R_{CO2} is a gas permeability of the carbon dioxide in the gas separation membrane. A gas permeability ratio Bcoz/Acoz is 4.0 or more and 128.0 or less, where A_{CO2} is a gas permeability of the carbon dioxide in the separation layer and B_{CO2} is a gas permeability of the carbon dioxide in the porous layer.

## Description

The present application is based on, and claims priority from JP Application Serial Number 2023-087718, filed May 29, 2023, the disclosure of which is hereby incorporated by reference herein in its entirety.

### BACKGROUND

### 1. Technical Field

The present disclosure relates to a gas separation membrane.

### 2. Related Art

In order to implement carbon neutrality or carbon minus, a technique is being considered to absorb and collect carbon dioxide discharged from thermal power plants, boiler facilities, or the like, and carbon dioxide in the atmosphere. As the technique, there has been known a membrane separation method of separating carbon dioxide using a gas separation membrane.

For example, JP-A-60-75320 discloses a gas selective permeable membrane that selectively allows a specific gas to permeate therethrough. The gas selective permeable membrane is manufactured through a process of laminating a thin membrane of a siloxane compound on a film-shaped polymer porous support, subjecting a surface layer of the thin membrane to a plasma treatment with a non-polymerizable gas, and depositing a plasma polymerized membrane on the thin membrane. It is disclosed that a gas selective permeable membrane having strong adhesion between a thin membrane and a plasma polymerized membrane can be obtained by these processes, and a thickness of the thin membrane is 1 µm to 30 µm. Further, it is disclosed that the gas selective permeable membrane is used to selectively allow gases such as oxygen, hydrogen, helium, and the like to permeate therethrough, and the separated gases are collected.

JP-A-60-75320 is an example of the related art.

In the gas selective permeable membrane described in JP-A-60-75320, a defect such as a through hole penetrating the plasma polymerized membrane (a separation layer) may occur. Particularly, when attempting to increase a permeability of a predetermined component, a defect ratio may increase, and mechanical characteristics of the plasma polymerized membrane may deteriorate. When the defect ratio increases, a flow rate of permeation through a defective portion increases, and a selective permeability (a gas selectivity ratio) of a predetermined component decreases.

On the other hand, in order to reduce the defect, it is conceivable to increase a thickness of the plasma polymerized membrane. However, in this case, the gas permeability decreases, and the energy consumption for the gas separation increases.

Therefore, it is required to implement a gas separation membrane that is excellent in mechanical characteristics and can achieve both gas selectivity ratio of carbon dioxide and gas permeability of carbon dioxide even when a separation layer has a defect.

### SUMMARY

A gas separation membrane according to an application example of the disclosure is a gas separation membrane for separating carbon dioxide from a mixed gas containing the carbon dioxide and a non-target component. The gas separation membrane includes: a porous layer; and a separation layer formed of a polymer material and in close contact with one surface of the porous layer. A gas selectivity ratio R_{CO2}/R₀ is 8 or more and less than 100, where R₀ is a gas permeability of the non-target component in the gas separation membrane and R_{CO2} is a gas permeability of the carbon dioxide in the gas separation membrane. A gas permeability ratio B_{CO2}/A_{CO2} is 4.0 or more and 128.0 or less, where A_{CO2} is a gas permeability of the carbon dioxide in the separation layer and B_{CO2} is a gas permeability of the carbon dioxide in the porous layer.

### BRIEF DESCRIPTION OF THE DRAWINGS

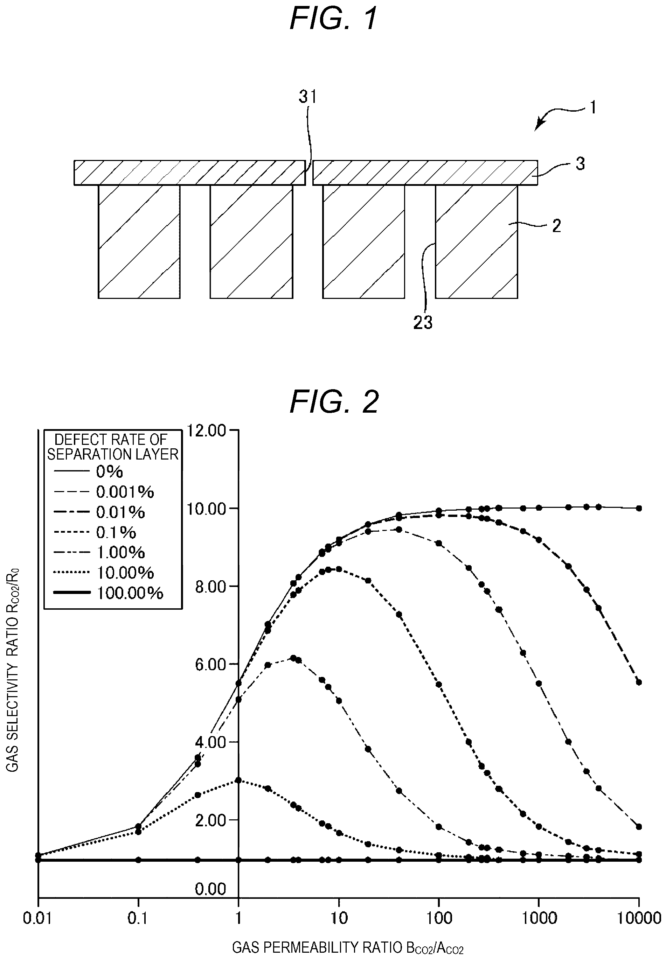

FIG. 1 is a cross-sectional view schematically showing a gas separation membrane according to an embodiment.
FIG. 2 is a graph obtained by simulating, for each defect rate of a separation layer, a relationship between a gas selectivity ratio R_{CO2}/R₀ of a gas separation membrane and a gas permeability ratio B_{CO2}/A_{CO2} of the gas separation membrane, in a case where the gas selectivity ratio R_{CO2}/R₀ is less than 10.

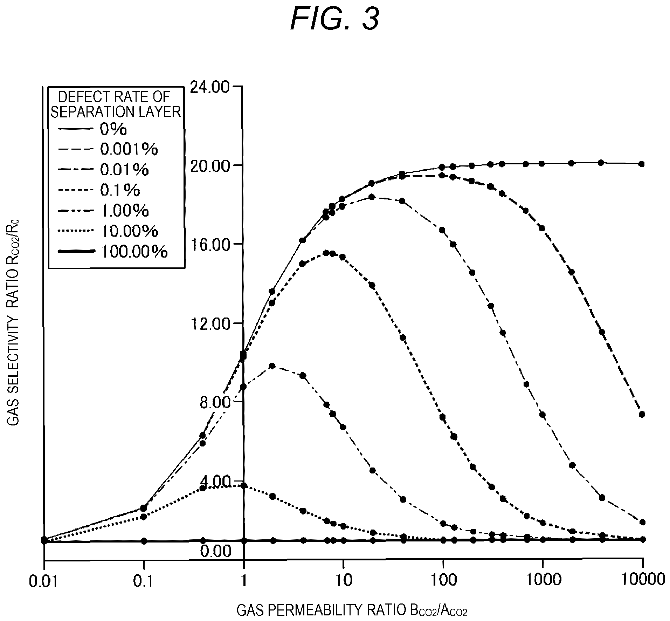

FIG. 3 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 20.

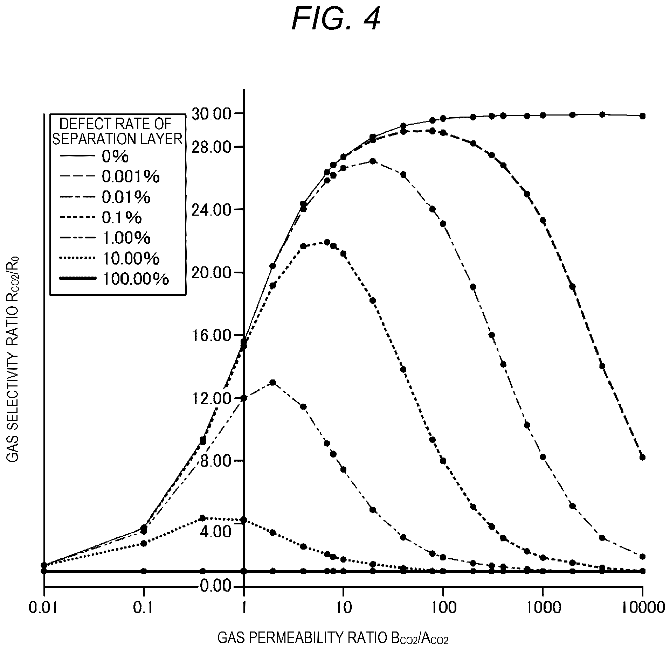

FIG. 4 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 30.

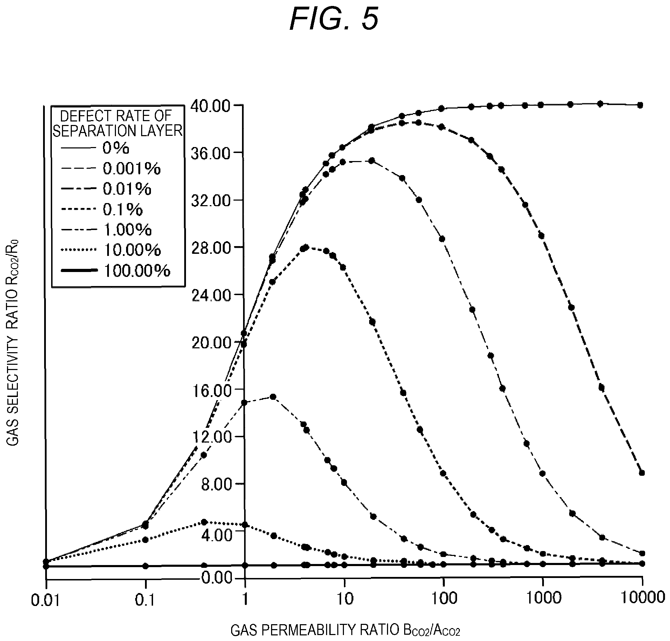

FIG. 5 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 40.

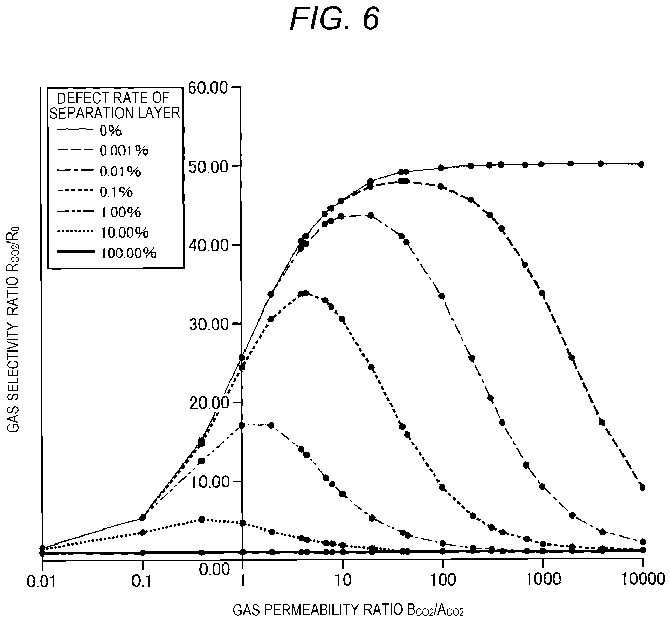

FIG. 6 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 50.

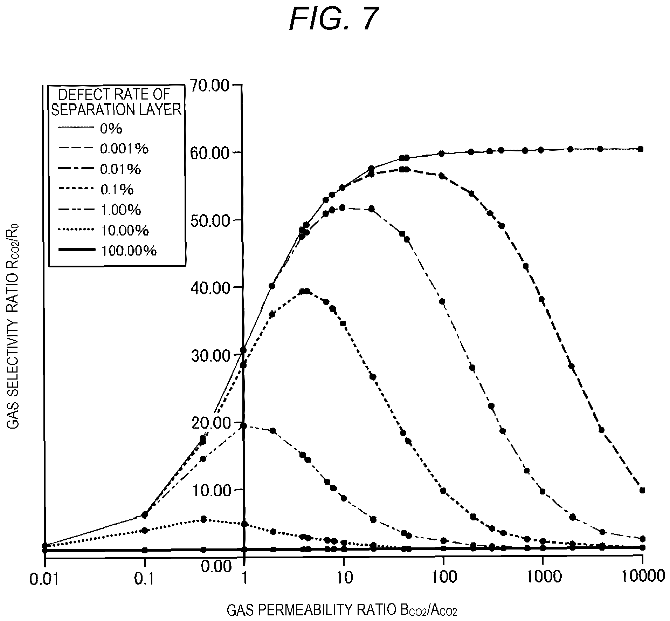

FIG. 7 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 60.

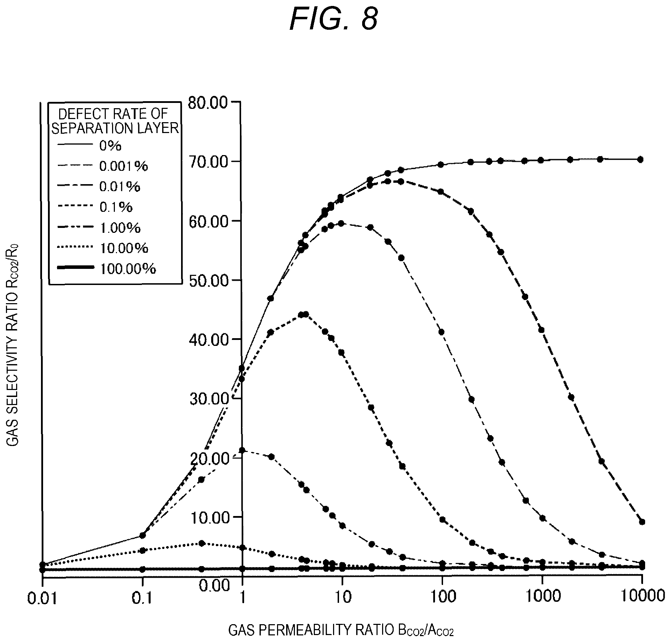

FIG. 8 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 70.

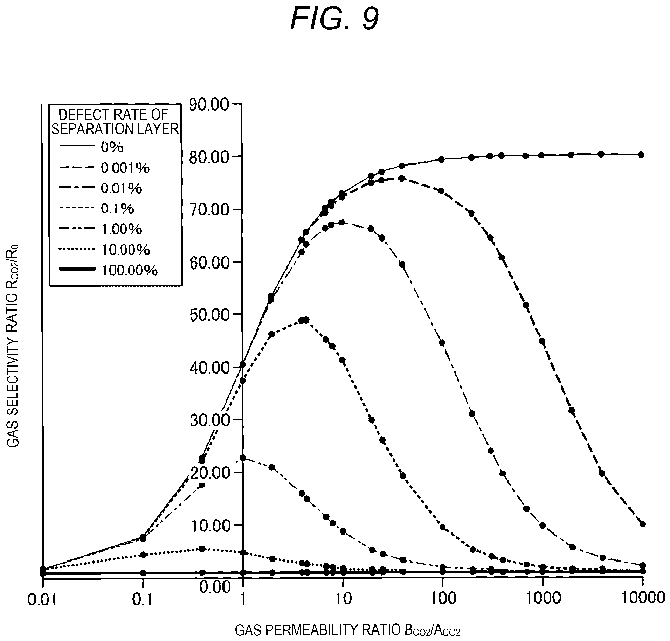

FIG. 9 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 80.

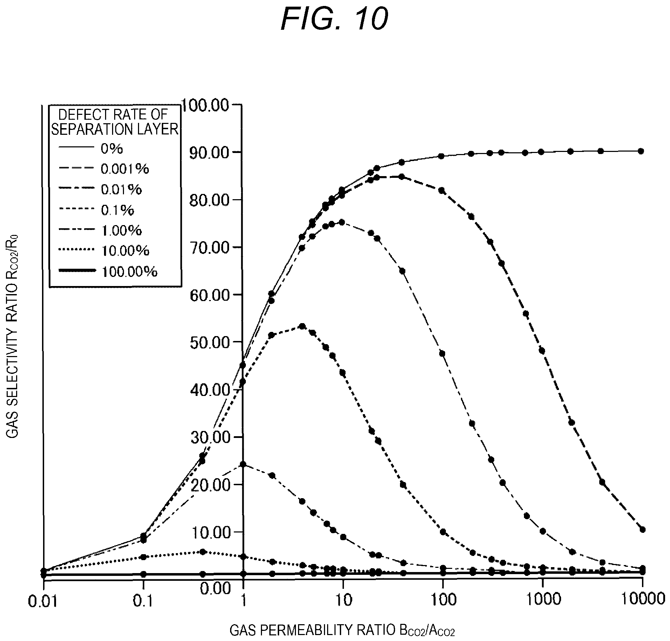

FIG. 10 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 90.

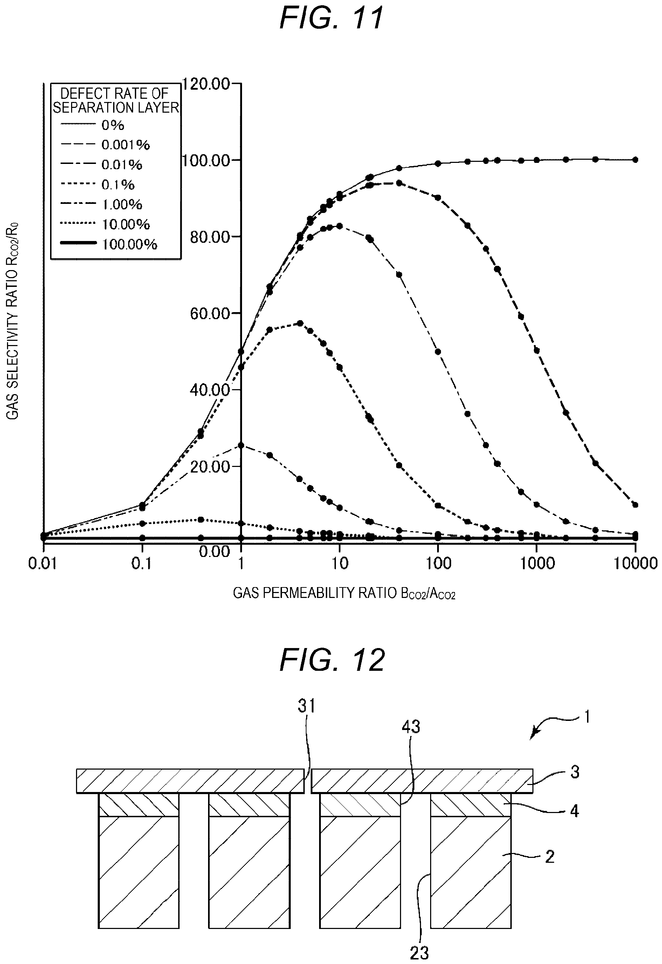

FIG. 11 is a graph obtained by simulating, for each defect rate of the separation layer, a relationship between the gas selectivity ratio R_{CO2}/R₀ of the gas separation membrane and the gas permeability ratio B_{CO2}/A_{CO2} of the gas separation membrane, in a case where the gas selectivity ratio R_{CO2}/R₀ is less than 100.
FIG. 12 is a cross-sectional view schematically showing a gas separation membrane according to a modification of the embodiment.

### DESCRIPTION OF EMBODIMENTS

Hereinafter, a gas separation membrane according to the present disclosure will be described in detail based on embodiments shown in the accompanying drawings.

### 1. Gas Separation Membrane

First, a configuration of a gas separation membrane according to an embodiment will be described.

FIG. 1 is a cross-sectional view schematically showing a gas separation membrane 1 according to the embodiment.

The gas separation membrane 1 shown in FIG. 1 has a function of selectively allowing carbon dioxide to permeate therethrough from a mixed gas containing the carbon dioxide and a non-target component. The gas separation membrane 1 shown in FIG. 1 includes a porous layer 2 and a separation layer 3. The non-target component refers to a gas component other than the carbon dioxide that is contained in the mixed gas.

The porous layer 2 is a porous membrane having holes 23 shown in FIG. 1. Such a porous layer 2 has a good gas permeability and supports the separation layer 3. Accordingly, mechanical characteristics of the gas separation membrane 1 as a whole can be improved without impairing a good gas selectivity ratio of the separation layer 3.

The separation layer 3 is provided on one surface of the porous layer 2, and is formed of a polymer material that is denser (lower in porosity) than the porous layer 2. Such a separation layer 3 closes upper ends of the holes 23. The separation layer 3 has a good gas selectivity ratio that allows the carbon dioxide in the mixed gas supplied upstream of the gas separation membrane 1 to selectively permeate downstream. Accordingly, the gas separation membrane 1 can separate the carbon dioxide in the mixed gas. In the following description, an upper side of the gas separation membrane 1 shown in FIG. 1 is referred to as "upstream" or simply referred to as "upper", and a lower side thereof is referred to as "downstream" or simply referred to as "lower".

The gas separation membrane 1 as described above has a function of selectively allowing carbon dioxide to permeate therethrough, and characteristics thereof are quantitatively represented by a gas selectivity ratio. Specifically, a gas selectivity ratio Rcoz/Ro of the gas separation membrane 1 is 8 or more and less than 100, where R₀ is a gas permeability of the non-target component in the gas separation membrane 1 and R_{CO2} is a gas permeability of the carbon dioxide in the gas separation membrane 1.

When the gas selectivity ratio R_{CO2}/R₀ of the gas separation membrane 1 is within the above range, the gas separation membrane 1 can efficiently separate and collect carbon dioxide in the mixed gas. When the gas selectivity ratio is less than the lower limit value, many non-target components are mixed in the collected carbon dioxide. Therefore, when storing or using the collected gas, economic efficiency, handleability, and the like thereof deteriorate. On the other hand, the gas selectivity ratio may exceed the upper limit value, and in this case, it is difficult to sufficiently increase the gas permeability of the carbon dioxide in the gas separation membrane 1, and a manufacturing difficulty level or manufacturing cost of the gas separation membrane 1 that implements such a gas selectivity ratio increases.

The gas permeability R₀ of the non-target component in the gas separation membrane 1 and the gas permeability R_{CO2} of the carbon dioxide in the gas separation membrane 1 are each measured according to a gas permeability test method (Part 1: differential pressure method) defined in JIS K 7126-1: 2006. A gas permeability measuring device is used for the measurement. Examples of the gas permeability measuring device include GTR-11A/31A manufactured by GTR TEC Corporation. In the device, gas that permeates through the gas separation membrane 1 is introduced into a gas chromatograph to measure the permeability of each component. Accordingly, each gas permeability of the non-target component and the carbon dioxide can be measured.

Examples of the non-target component include nitrogen and methane, and nitrogen is particularly envisaged. Therefore, examples of the above-described mixed gas include a mixed gas of carbon dioxide and nitrogen.

On the other hand, in the gas separation membrane 1, a gas permeability A_{CO2} of the carbon dioxide in the separation layer 3 and a gas permeability B_{CO2} of the carbon dioxide in the porous layer 2 satisfy a predetermined relationship. Specifically, in the gas separation membrane 1, a gas permeability ratio B_{CO2}/A_{CO2} is 4.0 or more and 128.0 or less.

When the gas permeability ratio B_{CO2}/A_{CO2} of the gas separation membrane 1 is within the above range, in the gas separation membrane 1, a porosity of the porous layer 2 can be optimized even when the separation layer 3 has a defect, that is, a through hole. Therefore, a decrease in gas permeability of the carbon dioxide in the gas separation membrane 1 as a whole can be prevented while preventing an increase in flow rate at which the mixed gas passing through the through hole of the separation layer 3 permeates downstream and a decrease in mechanical characteristics of the gas separation membrane 1. As a result, the gas separation membrane 1 that is excellent in mechanical characteristics and can make use of a good gas selectivity ratio of the carbon dioxide in the separation layer 3 even when the separation layer 3 has a defect can be implemented. That is, an influence of the defect of the separation layer 3 can be limited to a minimum by the porous layer 2, and thus the gas separation membrane 1 that is excellent in mechanical characteristics and can achieve both gas selectivity ratio of carbon dioxide and gas permeability of carbon dioxide can be implemented.

The gas permeability A_{CO2} of carbon dioxide in the separation layer 3 is obtained by subtracting the gas permeability B_{CO2} of carbon dioxide in the porous layer 2 from the gas permeability R_{CO2} of carbon dioxide in the gas separation membrane 1. The gas permeability B_{CO2} of carbon dioxide in the porous layer 2 can be measured according to a gas permeability test method (Part 1: differential pressure method) defined in JIS K 7126-1: 2006 for the remaining porous layer 2 after removing the separation layer 3 from the gas separation membrane 1. Examples of a method for removing the separation layer 3 include dissolution with a chemical or the like and removal by an etching method.

The separation layer 3 may have a through hole 31 shown in FIG. 1. The through hole 31 is, for example, a hole that is unintentionally generated in a manufacturing process of the separation layer 3 and penetrates the separation layer 3. Since such a through hole 31 is not intentionally formed, it is difficult to completely eliminate the through hole 31 when an inner diameter is small. That is, the through hole 31 can be said to be an unavoidable defect during manufacturing. However, since carbon dioxide cannot be separated in the through hole 31, the mixed gas passes through the through hole 31 as it is. Therefore, as the number of through holes 31 increases, the gas selectivity ratio of carbon dioxide of the gas separation membrane 1 decreases.

Therefore, in the embodiment, by optimizing the gas permeability ratio B_{CO2}/A_{CO2} in the gas separation membrane 1 according to the gas selectivity ratio of the gas separation membrane 1, even when there is a defect (the through hole 31) in the separation layer 3, the influence thereof can be prevented from becoming obvious in the gas selectivity ratio. Accordingly, while improving the mechanical characteristics by the porous layer 2, a decrease in gas permeability due to elimination of the need to make the separation layer 3 thicker than necessary can be prevented, and at the same time, a decrease in gas selectivity ratio of the gas separation membrane 1 can also be prevented. Therefore, the gas separation membrane 1 that is excellent in mechanical characteristics and can achieve both gas selectivity ratio of carbon dioxide and gas permeability of carbon dioxide even when the separation layer 3 has a defect can be obtained.

Therefore, when the gas permeability ratio B_{CO2}/A_{CO2} of the gas separation membrane 1 is less than the lower limit value, it is necessary to significantly decrease the gas permeability B_{CO2} of carbon dioxide in the porous layer 2 or significantly increase the gas permeability A_{CO2} of carbon dioxide in the separation layer 3. In this case, the gas permeability of carbon dioxide in the gas separation membrane 1 decreases, and it is necessary to make the separation layer 3 extremely thin. This results in a decrease in gas permeability and durability (mechanical characteristics) of the gas separation membrane 1 and an increase in manufacturing difficulty level. On the other hand, when the gas permeability ratio B_{CO2}/A_{CO2} of the gas separation membrane 1 exceeds the upper limit value, it is necessary to significantly increase the gas permeability B_{CO2} of carbon dioxide in the porous layer 2 or significantly decrease the gas permeability A_{CO2} of carbon dioxide in the separation layer 3. In this case, the separation layer 3 easily enters the holes 23, or the separation layer 3 needs to be made extremely thick. This results in an increase in manufacturing difficulty level of the gas separation membrane 1, a decrease in gas permeability of the gas separation membrane 1, and a decrease in durability (mechanical characteristics).

The separation layer 3 is in close contact with the porous layer 2. In the present description, the term "close contact" means that an adhesion interface between the separation layer 3 and the porous layer 2 has airtightness. Due to the airtightness, the separation layer 3 makes the holes 23 of the porous layer 2 independent from each other. That is, since there is no gap between the separation layer 3 and the porous layer 2, communication between the holes 23 via the gap can be prevented.

Further, as shown in FIG. 1, even when the separation layer 3 has a plurality of through holes 31, the influence thereof can be kept to a minimum. That is, even when there is the through hole 31, it is limited to communication only with the corresponding hole 23, and thus the influence of the through hole 31 can be prevented from spreading within the porous layer 2 and leading to a large permeation flow rate. As a result, even when there is a defect in the separation layer 3, a large decrease in gas selectivity ratio of carbon dioxide of the gas separation membrane 1 can be prevented.

Ideally, an area rate of the through hole 31 penetrating the separation layer 3 is 0%, but it is necessary to take into consideration a manufacturing difficulty level. In view of this, the area rate of the through hole 31 is preferably more than 0% and 0.05% or less, more preferably 0.001% or more and 0.03% or less, and still more preferably 0.003% or more and 0.01% or less. Accordingly, an increase in manufacturing difficulty level of the separation layer 3 can be prevented while preventing the influence of the through hole 31 from becoming apparent in the gas selectivity ratio.

When the area rate of the through hole 31 is less than the lower limit value, the manufacturing difficulty level of the separation layer 3 may increase. On the other hand, when the area rate of the through hole 31 exceeds the upper limit value, the influence of the through hole 31 becomes apparent, and the gas selectivity ratio of carbon dioxide of the gas separation membrane 1 may not be sufficiently increased, or the separation layer 3 may become extremely thick in order to increase the gas selectivity ratio.

The area rate of the through hole 31 is determined as a ratio of an area of a penetrating region to an area of an observation region by observing a cross section of the separation layer 3 with an electron microscope.

### 1.1. Porous Layer

As described above, the porous layer 2 is a porous membrane having the holes 23, and has a good gas permeability. The porous layer 2 has a rigidity higher than that of the separation layer 3, and is responsible for ensuring self-standing and durability of the gas separation membrane 1 as a whole.

Examples of a constituent material of the porous layer 2 include a polymer material, a ceramic material, and a metal material. The constituent material of the porous layer 2 may be a composite material of these materials and other materials.

Examples of the polymer material include polyolefin resins such as polyethylene and polypropylene, fluorine-containing resins such as polytetrafluoroethylene, polyvinyl fluoride, and polyvinylidene fluoride, polystyrene, cellulose, cellulose acetate, polyurethane, polyacrylonitrile, polyphenylene oxide, polysulfone, polyethersulfone, polyimide, polyaramid, and nylon.

Examples of the ceramic material include alumina, cordierite, mullite, silicon carbide, and zirconia. Examples of the metal material include stainless steel.

Among them, the ceramic material is preferably used as the constituent material of the porous layer 2. Since the ceramic material has a high rigidity and is a sintered material, the ceramic material has continuous holes. Therefore, by using the ceramic material as the constituent material of the porous layer 2, the gas separation membrane 1 that is excellent in mechanical characteristics and has a high gas permeability of carbon dioxide can be obtained.

A shape of the porous layer 2 may be a spiral shape, a tubular shape, a hollow fiber shape, or the like, in addition to a flat plate shape shown in FIG. 1.

An average thickness of the porous layer 2 is not particularly limited, and is preferably 1 µm or more and 3000 µm or less, more preferably 5 µm or more and 500 µm or less, and still more preferably 10 µm or more and 150 µm or less. Accordingly, the porous layer 2 has a necessary and sufficient rigidity to support the gas separation membrane 1. When the average thickness of the porous layer 2 is less than the lower limit value, the rigidity may be insufficient. On the other hand, when the average thickness of the porous layer 2 exceeds the upper limit value, the rigidity of the porous layer 2 may become too high, and handleability of the gas separation membrane 1 may decrease or adhesion of the separation layer 3 may decrease.

The average thickness of the porous layer 2 is an average value of thicknesses measured at 10 positions of the porous layer 2 in a stacking direction. The thickness of the porous layer 2 can be measured using, for example, a thickness gauge.

The porous layer 2 has the holes 23, and an average inner diameter thereof is referred to as an "average hole diameter". The average hole diameter of the porous layer 2 is preferably 0.2 µm or less, more preferably 0.01 µm or more and 0.15 µm or less, still more preferably 0.01 µm or more and 0.09 µm or less, and particularly preferably 0.01 µm or more and 0.07 µm or less. Accordingly, the separation layer 3 can be prevented from slipping out downstream of the porous layer 2 while sufficiently ensuring the gas permeability of carbon dioxide in the porous layer 2. When the average hole diameter of the porous layer 2 is less than the lower limit value, the gas permeability of carbon dioxide in the porous layer 2 may decrease. On the other hand, when the average hole diameter of the porous layer 2 exceeds the upper limit value, the separation layer 3 may slip out downstream of the porous layer 2.

The average hole diameter of the porous layer 2 can be measured by a through pore diameter evaluation device after the separation layer 3 is removed from the gas separation membrane 1 and the single porous layer 2 is taken out. Examples of the through pore diameter evaluation device include a perm porometer manufactured by PMI.

A porosity of the porous layer 2 is preferably 20% or more and 90% or less, and more preferably 30% or more and 80% or less. Accordingly, the porous layer 2 can achieve both good gas permeability and sufficient rigidity.

The porosity of the porous layer 2 can be measured by the above-described through hole diameter evaluation device after the separation layer 3 is removed from the gas separation membrane 1.

### 1.2. Separation layer

The separation layer 3 is formed at an upstream surface of the porous layer 2. Therefore, the separation layer 3 is a substantially dense membrane and has a good affinity with carbon dioxide molecules. Due to the affinity, the separation layer 3 selectively allows carbon dioxide to permeate therethrough.

A constituent material of the separation layer 3 is a polymer material. Examples of the polymer material include polyolefin resins such as polyethylene and polypropylene, fluorine-containing resins such as polytetrafluoroethylene, polyvinyl fluoride, and polyvinylidene fluoride, polystyrene, cellulose, cellulose acetate, polyurethane, polyacrylonitrile, polyphenylene oxide, polysulfone, polyethersulfone, polyimide, polyaramid, organopolysiloxane, polyethylene terephthalate (PET), polyacetal (POM), and polylactic acid (PLA). The constituent material of the separation layer 3 may be one of the polymer materials or a composite material of two or more of the polymer materials.

Among them, an organopolysiloxane is preferably used as the constituent material of the separation layer 3. One molecule of the organopolysiloxane includes at least a unit (a T unit) represented by R¹SiO_{3/2}, a unit (a D unit) represented by R²R³SiO_{2/2}, and a unit (an M unit) represented by R⁴R⁵R⁶SiO_{1/2} as a basic constituent unit. In each unit, R¹ to R⁶ are an aliphatic hydrocarbon or a hydrogen atom. One molecule of the organopolysiloxane includes a combination of the T unit, the D unit, and the M unit.

Specific examples of the organopolysiloxane include polydimethylsiloxane, polymethylphenylsiloxane, polydiphenylsiloxane,
a polysulfone/polyhydroxystyrene/polydimethylsiloxane copolymer,
a dimethylsiloxane/methylvinylsiloxane copolymer,
a dimethylsiloxane/diphenylsiloxane/methylvinylsiloxane copolymer,
a methyl-3,3,3-trifluoropropylsiloxane/methylvinylsiloxane copolymer,
a dimethylsiloxane/methylphenylsiloxane/methylvinylsiloxane copolymer, vinyl terminated diphenylsiloxane/dimethylsiloxane copolymer, vinyl terminated polydimethylsiloxane, amino terminated polydimethylsiloxane, phenyl terminated polydimethylsiloxane, H terminated polydimethylsiloxane, and a dimethylsiloxane-methylhydrosiloxane copolymer. The expression "vinyl terminated" or the like indicates that at least one end of a main chain contained in the organopolysiloxane is substituted with a substituent such as a vinyl group. This includes a form in which a crosslinking reactant is formed. The constituent material of the separation layer 3 may be one kind or a composite of two or more kinds thereof, or may be a composite material containing an organopolysiloxane as a main component in mass ratio and other resin components in combination.

The organopolysiloxane has a good affinity with carbon dioxide. Therefore, the separation layer 3 containing an organopolysiloxane exhibits a high gas selectivity ratio to carbon dioxide.

An average thickness of the separation layer 3 is not particularly limited, and is preferably 1000 nm or less, more preferably 10 nm or more and 800 nm or less, still more preferably 30 nm or more and 500 nm or less, and particularly preferably 50 nm or more and 200 nm or less. Accordingly, the separation layer 3 has a sufficient gas permeability while ensuring the above-described gas selectivity ratio. As a result, the gas separation membrane 1 that has a good selective separability of carbon dioxide, and can reduce an input amount of energy necessary for separation, specifically, can reduce a pressure difference between pressures upstream and downstream of the gas separation membrane 1 can be implemented. When the average thickness of the separation layer 3 is less than the lower limit value, a probability of occurrence of defects in the separation layer 3 may increase, or the separation layer 3 may be easily broken afterwards. On the other hand, when the average thickness of the separation layer 3 exceeds the upper limit value, the gas permeability of carbon dioxide in the separation layer 3 may decrease, the input amount of energy necessary for separation may increase, and flexibility of the separation layer 3 may decrease.

The average thickness of the separation layer 3 is preferably 0.0050% or more and 1.0% or less, more preferably 0.010% or more and 0.50% or less, and still more preferably 0.030% or more and 0.30% or less, of the average thickness of the porous layer 2. Accordingly, since a ratio of the thickness of the two layers can be optimized, the mechanical characteristics, the gas selectivity ratio, and the gas permeability of the gas separation membrane 1 can be satisfactorily balanced.

The average thickness of the separation layer 3 can be obtained, for example, by observing a cross section of the gas separation membrane 1 under magnification and averaging thicknesses at 10 locations. For the magnification observation, for example, a scanning electron microscope or a transmission electron microscope is used.

Any intermediate layer may be interposed between the separation layer 3 and the porous layer 2. The intermediate layer may have, for example, a function of increasing adhesion between the separation layer 3 and the porous layer 2, a function of preventing the separation layer 3 from entering the holes 23, and the like.

If necessary, any functional group may be introduced into an upstream surface of the separation layer 3 using a coupling agent or the like. By appropriately selecting the functional group, the affinity with carbon dioxide can be further increased.

### 1.3. Relationship between Gas Selectivity ratio R_{CO2}/R₀ and Gas Permeability Ratio B_{CO2}/A_{CO2}

The gas selectivity ratio R_{CO2}/R₀ is mainly influenced by the constituent material and thickness of the separation layer 3. For example, by using a material having a high affinity with carbon dioxide as the constituent material of the separation layer 3, the gas selectivity ratio R_{CO2}/R₀ can be increased. On the other hand, when the thickness of the separation layer 3 is reduced, a probability of defects occurring increases, and the gas selectivity ratio R_{CO2}/R₀ decreases. When the manufacturing process is strictly performed so as not to generate defects, the manufacturing cost may increase.

The gas selectivity ratio R_{CO2}/R₀ is adjusted within the above-described range in consideration of the use of the gas separation membrane 1, the type of the mixed gas, the manufacturing cost, and the like. In this case, it is preferable to optimize the gas permeability ratio B_{CO2}/A_{CO2} according to the adjusted value. Therefore, hereinafter, a range of the above-described gas selectivity ratio R_{CO2}/R₀ is divided into a plurality of sections, and the optimum gas permeability ratio B_{CO2}/A_{CO2} in each section is examined.

### 1.3.1. Case where when Gas Selectivity ratio R_{CO2}/R₀ is less than 10

FIG. 2 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 10. Specifically, FIG. 2 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 10 is assumed and the gas permeability ratio B_{CO2}/A_{CO2} of the gas separation membrane 1 is changed. The gas selectivity ratio of 10 in this case is a value that can be implemented in an ideal state in which the defect rate of the separation layer 3 is 0%, and thus is hereinafter referred to as an "ideal value".

In FIG. 2 and FIGS. 3 to 11 to be described later, the defect rate of the separation layer 3 is changed to seven levels of 0%, 0.001%, 0.01%, 0.1%, 1.00%, 10.00%, and 100.00%. Curves obtained by the simulation for each defect rate are arranged in order of 0%, 0.001%, 0.01%, 0.1%, 1.00%, 10.00%, and 100.00% from a top in each graph.

In the result shown in FIG. 2, by setting the gas permeability ratio B_{CO2}/A_{CO2} to 4.0 or more and 128.0 or less, for example, in implementing the gas selectivity ratio of 8 or more, the defect rate of the separation layer 3 (the area rate of the through hole 31) can be tolerated up to 0.01%. The defect rate of 0.01% is a value that can be achieved without significantly increasing the manufacturing difficulty level. Therefore, the simulation result shown in FIG. 2 supports a critical significance of the lower limit value and the upper limit value of the range of the gas permeability ratio B_{CO2}/A_{CO2}.

In FIG. 2, in a case where the gas permeability ratio B_{CO2}/A_{CO2} is 128.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 10 of the gas selectivity ratio, and it can be said that when the value is 0.8 or more, the value is sufficiently close to the ideal value. Therefore, the simulation result shown in FIG. 2 means that, by optimizing the gas permeability ratio B_{CO2}/A_{CO2}, the influence of the defect rate can be prevented from becoming apparent in the gas selectivity ratio R_{CO2}/R₀ even under a relatively severe condition (a condition in which the defect rate is relatively high) in which the defect rate of the separation layer 3 is 0.01%.

In view of the above, when the gas selectivity ratio R_{CO2}/R₀ is 8 or more and less than 10, the gas permeability ratio B_{CO2}/A_{CO2} is preferably 4.0 or more and 128.0 or less.

### 1.3.2. Case where when Gas Selectivity ratio R_{CO2}/R₀ is less than 20

FIG. 3 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 20. Specifically, FIG. 3 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 20 is assumed and the gas permeability ratio B_{CO2}/A_{CO2} of the gas separation membrane 1 is changed. The gas selectivity ratio of 20 in this case is a value that can be implemented in an ideal state in which the defect rate of the separation layer 3 is 0%, and thus is hereinafter referred to as an "ideal value".

In the result shown in FIG. 3, by setting the gas permeability ratio B_{CO2}/A_{CO2} to 4.0 or more and 128.0 or less, for example, in implementing the gas selectivity ratio of 16 or more, the defect rate of the separation layer 3 (the area rate of the through hole 31) can be tolerated up to 0.01%.

In FIG. 3, in a case where the gas permeability ratio B_{CO2}/A_{CO2} is 128.0 being the upper limit value, when the gas selectivity ratio R_{CO2}/R₀ of the gas separation membrane 1 including the separation layer 3 in which defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 20 of the gas selectivity ratio, and it can be said that when the value is 0.8 or more, the value is sufficiently close to the ideal value. Therefore, the simulation result shown in FIG. 3 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 10 or more and less than 20, the gas permeability ratio B_{CO2}/A_{CO2} is preferably 4.0 or more and 128.0 or less.

### 1.3.3. Case where when Gas Selectivity ratio R_{CO2}/R₀ is less than 30

FIG. 4 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 30. Specifically, FIG. 4 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 30 is assumed and the gas permeability ratio B_{CO2}/A_{CO2} of the gas separation membrane 1 is changed. The gas selectivity ratio of 30 in this case is a value that can be implemented in an ideal state in which the defect rate of the separation layer 3 is 0%, and thus is hereinafter referred to as an "ideal value".

In the result shown in FIG. 4, by setting the gas permeability ratio B_{CO2}/A_{CO2} to 4.1 or more and 81.0 or less, for example, in implementing the gas selectivity ratio of 24 or more, the defect rate of the separation layer 3 (the area rate of the through hole 31) can be tolerated up to 0.01%.

In FIG. 4, in a case where the gas permeability ratio B_{CO2}/A_{CO2} is 81.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 30 of the gas selectivity ratio, and it can be said that when the value is 0.8 or more, the value is sufficiently close to the ideal value. Therefore, the simulation result shown in FIG. 4 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 20 or more and less than 30, the gas permeability ratio B_{CO2}/A_{CO2} is preferably 4.1 or more and 81.0 or less.

### 1.3.4. Case where when Gas Selectivity ratio R_{CO2}/R₀ is less than 40

FIG. 5 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 40. Specifically, FIG. 5 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 40 is assumed and the gas permeability ratio B_{CO2}/A_{CO2} of the gas separation membrane 1 is changed. The gas selectivity ratio of 40 in this case is a value that can be implemented in an ideal state in which the defect rate of the separation layer 3 is 0%, and thus is hereinafter referred to as an "ideal value".

In the result shown in FIG. 5, by setting the gas permeability ratio B_{CO2}/A_{CO2} to 4.3 or more and 59.0 or less, for example, in implementing the gas selectivity ratio of 32 or more, the defect rate of the separation layer 3 (the area rate of the through hole 31) can be tolerated up to 0.01%.

In FIG. 5, in a case where the gas permeability ratio B_{CO2}/A_{CO2} is 59.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 40 of the gas selectivity ratio, and it can be said that when the value is 0.8 or more, the value is sufficiently close to the ideal value. Therefore, the simulation result shown in FIG. 5 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 30 or more and less than 40, the gas permeability ratio B_{CO2}/A_{CO2} is preferably 4.3 or more and 59.0 or less.

### 1.3.5. Case where when Gas Selectivity ratio R_{CO2}/R₀ is less than 50

FIG. 6 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 50. Specifically, FIG. 6 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 50 is assumed and the gas permeability ratio B_{CO2}/A_{CO2} of the gas separation membrane 1 is changed. The gas selectivity ratio of 50 in this case is a value that can be implemented in an ideal state in which the defect rate of the separation layer 3 is 0%, and thus is hereinafter referred to as an "ideal value".

In the result shown in FIG. 6, by setting the gas permeability ratio B_{CO2}/A_{CO2} to 4.4 or more and 45.0 or less, for example, in implementing the gas selectivity ratio of 40 or more, the defect rate of the separation layer 3 (the area rate of the through hole 31) can be tolerated up to 0.01%.

In FIG. 6, in a case where the gas permeability ratio B_{CO2}/A_{CO2} is 45.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 50 of the gas selectivity ratio, and it can be said that when the value is 0.8 or more, the value is sufficiently close to the ideal value. Therefore, the simulation result shown in FIG. 6 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 40 or more and less than 50, the gas permeability ratio B_{CO2}/A_{CO2} is preferably 4.4 or more and 45.0 or less.

### 1.3.6. Case where when Gas Selectivity ratio R_{CO2}/R₀ is less than 60

FIG. 7 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 60. Specifically, FIG. 7 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 60 is assumed and the gas permeability ratio B_{CO2}/A_{CO2} of the gas separation membrane 1 is changed. The gas selectivity ratio of 60 in this case is a value that can be implemented in an ideal state in which the defect rate of the separation layer 3 is 0%, and thus is hereinafter referred to as an "ideal value".

In the result shown in FIG. 7, by setting the gas permeability ratio B_{CO2}/A_{CO2} to 4.5 or more and 37.0 or less, for example, in implementing the gas selectivity ratio of 48 or more, the defect rate of the separation layer 3 (the area rate of the through hole 31) can be tolerated up to 0.01%.

In FIG. 7, in a case where the gas permeability ratio B_{CO2}/A_{CO2} is 37.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 60 of the gas selectivity ratio, and it can be said that when the value is 0.8 or more, the value is sufficiently close to the ideal value. Therefore, the simulation result shown in FIG. 7 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 50 or more and less than 60, the gas permeability ratio B_{CO2}/A_{CO2} is preferably 4.5 or more and 37.0 or less.

### 1.3.7. Case where when Gas Selectivity ratio R_{CO2}/R₀ is less than 70

FIG. 8 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 70. Specifically, FIG. 8 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 70 is assumed and the gas permeability ratio B_{CO2}/A_{CO2} of the gas separation membrane 1 is changed. The gas selectivity ratio of 70 in this case is a value that can be implemented in an ideal state in which the defect rate of the separation layer 3 is 0%, and thus is hereinafter referred to as an "ideal value".

In the result shown in FIG. 8, by setting the gas permeability ratio B_{CO2}/A_{CO2} to 4.7 or more and 30.0 or less, for example, in implementing the gas selectivity ratio of 56 or more, the defect rate of the separation layer 3 (the area rate of the through hole 31) can be tolerated up to 0.01%.

In FIG. 8, in a case where the gas permeability ratio B_{CO2}/A_{CO2} is 30.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 70 of the gas selectivity ratio, and it can be said that when the value is 0.8 or more, the value is sufficiently close to the ideal value. Therefore, the simulation result shown in FIG. 8 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 60 or more and less than 70, the gas permeability ratio B_{CO2}/A_{CO2} is preferably 4.7 or more and 30.0 or less.

### 1.3.8. Case where when Gas Selectivity ratio R_{CO2}/R₀ is less than 80

FIG. 9 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 80. Specifically, FIG. 9 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 80 is assumed and the gas permeability ratio B_{CO2}/A_{CO2} of the gas separation membrane 1 is changed. The gas selectivity ratio of 80 in this case is a value that can be implemented in an ideal state in which the defect rate of the separation layer 3 is 0%, and thus is hereinafter referred to as an "ideal value".

In the result shown in FIG. 9, by setting the gas permeability ratio B_{CO2}/A_{CO2} to 4.9 or more and 25.0 or less, for example, in implementing the gas selectivity ratio of 64 or more, the defect rate of the separation layer 3 (the area rate of the through hole 31) can be tolerated up to 0.01%.

In FIG. 9, in a case where the gas permeability ratio B_{CO2}/A_{CO2} is 25.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 80 of the gas selectivity ratio, and it can be said that when the value is 0.8 or more, the value is sufficiently close to the ideal value. Therefore, the simulation result shown in FIG. 9 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 70 or more and less than 80, the gas permeability ratio B_{CO2}/A_{CO2} is preferably 4.9 or more and 25.0 or less.

### 1.3.9. Case where when Gas Selectivity ratio R_{CO2}/R₀ is less than 90

FIG. 10 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 90. Specifically, FIG. 10 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 90 is assumed and the gas permeability ratio B_{CO2}/A_{CO2} of the gas separation membrane 1 is changed. The gas selectivity ratio of 90 in this case is a value that can be implemented in an ideal state in which the defect rate of the separation layer 3 is 0%, and thus is hereinafter referred to as an "ideal value".

In the result shown in FIG. 10, by setting the gas permeability ratio B_{CO2}/A_{CO2} to 5.1 or more and 22.0 or less, for example, in implementing the gas selectivity ratio of 72 or more, the defect rate of the separation layer 3 (the area rate of the through hole 31) can be tolerated up to 0.01%.

In FIG. 10, in a case where the gas permeability ratio B_{CO2}/A_{CO2} is 22.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 90 of the gas selectivity ratio, and it can be said that when the value is 0.8 or more, the value is sufficiently close to the ideal value. Therefore, the simulation result shown in FIG. 10 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 80 or more and less than 90, the gas permeability ratio B_{CO2}/A_{CO2} is preferably 5.1 or more and 22.0 or less.

### 1.3.10. Case where when Gas Selectivity ratio R_{CO2}/R₀ is less than 100

FIG. 11 is a graph obtained by simulating, for each defect rate of the separation layer 3, a relationship between the gas selectivity ratio R_{CO2}/R₀ of the gas separation membrane 1 and the gas permeability ratio B_{CO2}/A_{CO2} of the gas separation membrane 1, in a case where the gas selectivity ratio R_{CO2}/R₀ is less than 100. Specifically, FIG. 11 is a graph obtained by simulating, for each defect rate of the separation layer 3, a transition of the gas selectivity ratio when the gas separation membrane 1 in which the defect rate of the separation layer 3 is 0% and the gas selectivity ratio R_{CO2}/R₀ is 100 is assumed and the gas permeability ratio B_{CO2}/A_{CO2} of the gas separation membrane 1 is changed. The gas selectivity ratio of 100 in this case is a value that can be implemented in an ideal state in which the defect rate of the separation layer 3 is 0%, and thus is hereinafter referred to as an "ideal value".

In the result shown in FIG. 11, by setting the gas permeability ratio B_{CO2}/A_{CO2} to 5.3 or more and 19.0 or less, for example, in implementing the gas selectivity ratio of 80 or more, the defect rate of the separation layer 3 (the area rate of the through hole 31) can be tolerated up to 0.01%.

In FIG. 11, in a case where the gas permeability ratio B_{CO2}/A_{CO2} is 19.0 being the upper limit value, when the gas selectivity ratio R_{CO2}/R₀ of the gas separation membrane 1 including the separation layer 3 in which the defect rate is 0% is 1, the gas selectivity ratio R_{CO2}/R₀ of the gas separation membrane 1 including the separation layer 3 in which the defect rate is 0.01% is 0.8 or more. The value can be considered as an arrival rate to the ideal value 100 of the gas selectivity ratio, and it can be said that when the value is 0.8 or more, the value is sufficiently close to the ideal value. Therefore, the simulation result shown in FIG. 11 means that, by optimizing the gas permeability ratio B_{CO2}/A_{CO2}, the influence of the defect rate can be prevented from becoming apparent in the gas selectivity ratio R_{CO2}/R₀ even under a relatively severe condition in which the defect rate of the separation layer 3 is 0.01%.

In view of the above, when the gas selectivity ratio R_{CO2}/R₀ is 90 or more and less than 100, the gas permeability ratio B_{CO2}/A_{CO2} is preferably 5.3 or more and 19.0 or less.

### 2. Method for Manufacturing Gas Separation Membrane

Next, a method for manufacturing the gas separation membrane 1 shown in FIG. 1 will be described.

First, the separation layer 3 is formed at one surface of the porous layer 2. Examples of the method for forming the separation layer 3 include a sol gel method, a coating method, a plasma CVD method, a plasma polymerization method, and an atomic layer deposition (ALD) method. Examples of the coating method include a dipping method, a dripping method, an inkjet method, a dispenser method, a spraying method, a screen printing method, a coater coating method, and a spin coating method.

When the constituent material of the separation layer 3 is an organopolysiloxane, the plasma polymerization method is preferably used. According to the plasma polymerization method, the organopolysiloxane can be deposited while cleaning and activating the porous layer 2. Accordingly, the formed separation layer 3 is more firmly in close contact with the porous layer 2. Since the plasma polymerization method is a type of a vapor deposition method, a part of molecules to be deposited adheres to inner walls of the holes 23 of the porous layer 2. Accordingly, the adhesion of the separation layer 3 can be further improved. Further, since a membrane (a plasma polymerized membrane) formed by the plasma polymerization method is densified, the separation layer 3 having fewer through holes 31 can be formed.

Examples of a raw material gas used in the plasma polymerization method include organosiloxanes such as methylsiloxane, octamethyltrisiloxane, decamethyltetrasiloxane, decamethylcyclopentasiloxane, octamethylcyclotetrasiloxane, and methylphenylsiloxane.

A pressure inside a chamber used in the plasma polymerization method is preferably about 133.3 × 10⁻⁵ Pa or more and 1333 Pa or less (1 × 10⁻⁵ Torr or more and 10 Torr or less).

A temperature of the porous layer 2 used in the plasma polymerization method is preferably about 25°C or higher and 100°C or lower, and a membrane formation time is preferably about 1 minute or more and 10 minutes or less.

When the constituent material of the separation layer 3 is an organopolysiloxane, the separation layer 3 can be formed by the following coating method. In the coating method, for example, a resin solution obtained by mixing an organopolysiloxane before a curing reaction and a solvent is used. The resin solution is applied to one surface of the porous layer 2 and then cured. Thus, the separation layer 3 is obtained.

### 3. Modification

Next, the gas separation membrane 1 according to a modification of the embodiment will be described.

FIG. 12 is a cross-sectional view schematically showing the gas separation membrane 1 according to the modification of the embodiment.

Hereinafter, the modification of the embodiment will be described, and in the following description, differences from the above-described embodiment will be mainly described, and description of similar matters will be omitted. In FIG. 12, the same reference numerals are given to matters the same as those in FIG. 1.

The gas separation membrane 1 shown in FIG. 12 is the same as the gas separation membrane 1 shown in FIG. 1 except that an intermediate layer4 is provided between the porous layer 2 and the separation layer 3.

Since the intermediate layer 4 is formed at an upstream surface of the porous layer 2, the intermediate layer 4 inherits a porosity of the porous layer 2 and has holes 43. Therefore, the intermediate layer 4 achieves a large adhesion force through the close contact between the porous layer 2 and the separation layer 3, and also has a good gas permeability without nearly blocking the holes 23 of the porous layer 2.

A constituent material of the intermediate layer 4 is an organopolysiloxane. As the organopolysiloxane, those described above are used. The constituent material of the intermediate layer 4 may be the same as or may be different from the constituent material of the separation layer 3.

The intermediate layer 4 is chemically bonded to the separation layer 3. A chemical bond includes a hydrogen bond, a covalent bond, or the like, and a covalent bond is particularly preferred. Accordingly, the separation layer 3 is more firmly in close contact with the porous layer 2 via the intermediate layer 4. As a result, the gas separation membrane 1 has particularly good mechanical characteristics.

Such good mechanical characteristics can provide a freedom degree to the form of the gas separation membrane 1 during use. For example, the gas separation membrane 1 may be used in a curved state or a bent state. When the gas separation membrane 1 is used in such a state, peeling may occur between the porous layer 2 and the separation layer 3 when an adhesion strength is low.

On the other hand, by interposing the intermediate layer 4, the adhesion strength can be increased and the occurrence of peeling or the like can be prevented. As a result, the gas separation membrane 1 is less likely to be broken even when used in a curved state or a bent state. In the bent state, for example, a surface area of the gas separation membrane 1 can be increased without increasing an area of a module using the gas separation membrane 1. Therefore, a density of the module using the gas separation membrane 1 can be increased.

An average thickness of the intermediate layer 4 is not particularly limited, and is preferably 1000 nm or less, more preferably 3 nm or more and 500 nm or less, and still more preferably 5 nm or more and 300 nm or less. Accordingly, the intermediate layer 4 has a sufficient adhesion force. Since the intermediate layer 4 does not become too thick and has the holes 43, the intermediate layer 4 has a good gas permeability like the porous layer 2.

A total of the average thickness of the separation layer 3 and the average thickness of the intermediate layer 4 is preferably 1500 nm or less, more preferably 50 nm or more and 500 nm or less, and even more preferably 100 nm or more and 400 nm or less. Accordingly, the separation layer 3 is strongly in close contact with the porous layer 2 via the intermediate layer 4, and the intermediate layer 4 is less likely to inhibit the good gas permeability of the porous layer 2.

The average thickness of the intermediate layer 4 may be larger than or equal to the average thickness of the separation layer 3, and is preferably set to be smaller than the separation layer 3. In this case, a difference between the average thickness of the separation layer 3 and the average thickness of the intermediate layer 4 is preferably more than 0 nm and 300 nm or less, more preferably 10 nm or more and 150 nm or less, and still more preferably 15 nm or more and 100 nm or less. Accordingly, a balance between the thicknesses of the separation layer 3 and the intermediate layer 4 is improved, peeling or the like due to an excessively large difference in membrane thickness is less likely to occur, and the separation layer 3 and the intermediate layer 4 can favorably exhibit respective functions thereof. The difference is obtained by subtracting the average thickness of the intermediate layer 4 from the average thickness of the separation layer 3.

Next, a method for manufacturing the gas separation membrane according to the modification of the embodiment will be described.

First, an organopolysiloxane is deposited at one surface of the porous layer 2.
Thus, the intermediate layer 4 is obtained.

Examples of the organopolysiloxane depositing method include a sol gel method, a coating method, a plasma CVD method, a plasma polymerization method, and an atomic layer deposition (ALD) method. Among them, a plasma polymerization method is preferably used. According to the plasma polymerization method, the organopolysiloxane can be deposited while cleaning and activating the porous layer 2. Accordingly, the formed intermediate layer 4 is more firmly in close contact with the porous layer 2. Since the plasma polymerization method is a type of a vapor deposition method, a part of molecules to be deposited adheres to inner walls of the holes 23 of the porous layer 2. Accordingly, the adhesion of the intermediate layer 4 can be further improved. Further, since the membrane (the plasma polymerized membrane) formed by the plasma polymerization method is densified, the intermediate layer 4 capable of more firmly anchoring the separation layer 3 to the porous layer 2 is formed.

Examples of a raw material gas used in the plasma polymerization method include organosiloxanes such as methylsiloxane, octamethyltrisiloxane, decamethyltetrasiloxane, decamethylcyclopentasiloxane, octamethylcyclotetrasiloxane, and methylphenylsiloxane.

A pressure inside a chamber used in the plasma polymerization method is preferably about 133.3 × 10⁻⁵ Pa or more and 1333 Pa or less (1 × 10⁻⁵ Torr or more and 10 Torr or less).

A temperature of the porous layer 2 used in the plasma polymerization method is preferably about 25°C or higher and 100°C or lower, and a membrane formation time is preferably about 1 minute or more and 10 minutes or less.

Next, a sheet serving as a sacrificial layer is prepared, and the separation layer 3 is formed at a surface thereof. A method for forming the separation layer 3 is as described above.

Examples of a constituent material of the sacrificial layer include a material that is dissolved in a solvent or the like. Examples of the constituent material of the sacrificial layer include water-soluble resins such as polyvinyl alcohol, polyethylene oxide, and gelatin, and acrylic resins. Among them, the water-soluble resin is suitable as the constituent material of the sacrificial layer because it is easily dissolved in an aqueous solvent.

Next, the intermediate layer 4 is subjected to an activation treatment. Examples of the activation treatment include a method of irradiating the intermediate layer 4 with energy rays, a method of heating the intermediate layer 4, a method of exposing the intermediate layer 4 to plasma or corona, and a method of exposing the intermediate layer 4 to ozone gas. Examples of the energy ray include infrared rays, ultraviolet rays, and visible light. When the activation treatment is performed, a part of organic groups of the organopolysiloxane constituting the intermediate layer 4 is eliminated. After the elimination of the organic group, active species are generated by adsorption of H atoms or moisture to dangling bonds. Examples of the active species include a Si-H group and a Si-OH group. The activation treatment may be performed as necessary, and may be omitted when sufficient active species are present. The intermediate layer 4 can be cleaned by the activation treatment, which can contribute to further improvement in bonding strength.

Similarly, the separation layer 3 is also subjected to the activation treatment. Accordingly, active species are generated in the separation layer 3 as well. The activation treatment may also be performed as necessary, and may be omitted when sufficient active species are present.

Next, activated surfaces of the separation layer 3 and the intermediate layer 4 are brought into contact with each other. Then, a pressure is applied in this state. Accordingly, the activated surfaces are bonded to each other. The bonding is based on a chemical bond. Specifically, when the surfaces are brought into contact with each other, for example, a hydrogen bond is generated between the active species. Next, when the separation layer 3 and the intermediate layer 4 are pressurized, dehydration polycondensation occurs between the active species. As a result, the surfaces are bonded to each other by a covalent bond.

According to such a method, no inclusion is present at a bonding interface. Therefore, the gas separation membrane 1 having good mechanical characteristics, a gas permeability, and a selective separability can be obtained without inhibiting gas permeation at the bonding interface.

Next, the sacrificial layer is removed. Thus, the gas separation membrane 1 is obtained. Removal of the sacrificial layer is performed, for example, by bringing the sacrificial layer into contact with a solvent containing water, an organic solvent, or the like. Accordingly, the sacrificial layer can be dissolved and removed. With such a method, even when the separation layer 3 is thin, the sacrificial layer can be removed without affecting the separation layer 3. Therefore, the gas separation membrane 1 including the separation layer 3 having a low porosity even when it is thin can be manufactured.

A clean surface of the constituent material is exposed on a surface of the separation layer 3 from which the sacrificial layer is removed. In this surface, an affinity of the constituent material with carbon dioxide is sufficiently exhibited. Therefore, the gas separation membrane 1 manufactured by the above method is particularly excellent in selective separability of carbon dioxide.

### 4. Use of Gas Separation Membrane

The gas separation membrane 1 according to the embodiment can be used for gas separation and collection, gas separation and purification, and the like. For example, the gas separation membrane 1 is used to efficiently separate carbon dioxide from a mixed gas containing gas components such as hydrogen, helium, carbon monoxide, carbon dioxide, hydrogen sulfide, oxygen, nitrogen, ammonia, sulfur oxide, nitrogen oxide, saturated hydrocarbons such as methane and ethane, unsaturated hydrocarbons such as propylene, and perfluoro hydrocarbons such as tetrafluoroethane. Accordingly, for example, the gas separation membrane 1 can be effectively used in a technique of separating and collecting carbon dioxide contained in the atmosphere (direct air collection (DAC)) or a technique of separating and collecting carbon dioxide from crude oil-associated gas or natural gas, whose main component is methane.

### 5. Effects of Embodiment

As described above, the gas separation membrane 1 according to the embodiment includes the porous layer 2 and the separation layer 3, and separates carbon dioxide from a mixed gas containing the carbon dioxide and a non-target component. The separation layer 3 is formed of a polymer material and in close contact with one surface of the porous layer 2. A gas selectivity ratio R_{CO2}/R₀ is 8 or more and less than 100, where R₀ is a gas permeability of the non-target component in the gas separation membrane 1 and R_{CO2} is a gas permeability of the carbon dioxide in the gas separation membrane 1. Further, a gas permeability ratio Bcoz/Acoz is 4.0 or more and 128.0 or less, where A_{CO2} is a gas permeability of the carbon dioxide in the separation layer 3 and B_{CO2} is a gas permeability of the carbon dioxide in the porous layer 2.

According to such a configuration, the gas separation membrane 1 that is excellent in mechanical characteristics and can achieve both gas selectivity ratio of carbon dioxide and gas permeability of carbon dioxide even when the separation layer 3 has a defect can be obtained.

The polymer material may contain an organopolysiloxane. In this case, an average thickness of the separation layer 3 is preferably 10 nm or more and 800 nm or less.

According to such a configuration, the separation layer 3 having a good affinity with carbon dioxide can be obtained. The separation layer 3 having the above-described average thickness has a sufficient gas permeability while ensuring the above-described gas selectivity ratio. As a result, the gas separation membrane 1 that has a good selective separability of carbon dioxide, and can reduce an input amount of energy necessary for separation, specifically, can reduce a pressure difference between pressures upstream and downstream of the gas separation membrane 1 can be implemented.

An area rate of the through hole 31 penetrating the separation layer 3 is preferably more than 0% and 0.05% or less.

According to such a configuration, an increase in manufacturing difficulty level of the separation layer 3 can be prevented while preventing the influence of the through hole 31 from becoming apparent in the gas selectivity ratio.

The gas selectivity ratio R_{CO2}/R₀ is preferably 20 or more and less than 30, and the gas permeability ratio B_{CO2}/A_{CO2} is preferably 4.1 or more and 81.0 or less.

According to such a configuration, even under a relatively severe condition in which the defect rate of the separation layer 3 is 0.01%, the influence of the defect rate can be prevented from becoming apparent in the gas selectivity ratio R_{CO2}/R₀.

The gas selectivity ratio R_{CO2}/R₀ is preferably 30 or more and less than 40, and the gas permeability ratio B_{CO2}/A_{CO2} is preferably 4.3 or more and 59.0 or less.

According to such a configuration, even under a relatively severe condition in which the defect rate of the separation layer 3 is 0.01%, the influence of the defect rate can be prevented from becoming apparent in the gas selectivity ratio R_{CO2}/R₀.

The gas selectivity ratio R_{CO2}/R₀ is preferably 40 or more and less than 50, and the gas permeability ratio B_{CO2}/A_{CO2} is preferably 4.4 or more and 45.0 or less.

According to such a configuration, even under a relatively severe condition in which the defect rate of the separation layer 3 is 0.01%, the influence of the defect rate can be prevented from becoming apparent in the gas selectivity ratio R_{CO2}/R₀.

The gas selectivity ratio R_{CO2}/R₀ is preferably 50 or more and less than 60, and the gas permeability ratio B_{CO2}/A_{CO2} is preferably 4.5 or more and 37.0 or less.

According to such a configuration, even under a relatively severe condition in which the defect rate of the separation layer 3 is 0.01%, the influence of the defect rate can be prevented from becoming apparent in the gas selectivity ratio Rcoz/Ro.

The gas selectivity ratio R_{CO2}/R₀ is preferably 60 or more and less than 70, and the gas permeability ratio B_{CO2}/A_{CO2} is preferably 4.7 or more and 30.0 or less.

According to such a configuration, even under a relatively severe condition in which the defect rate of the separation layer 3 is 0.01%, the influence of the defect rate can be prevented from becoming apparent in the gas selectivity ratio R_{CO2}/R₀.

The gas selectivity ratio R_{CO2}/R₀ is preferably 70 or more and less than 80, and the gas permeability ratio B_{CO2}/A_{CO2} is preferably 4.9 or more and 25.0 or less.

According to such a configuration, even under a relatively severe condition in which the defect rate of the separation layer 3 is 0.01%, the influence of the defect rate can be prevented from becoming apparent in the gas selectivity ratio R_{CO2}/R₀.

The gas selectivity ratio R_{CO2}/R₀ is preferably 80 or more and less than 90, and the gas permeability ratio B_{CO2}/A_{CO2} is preferably 5.1 or more and 22.0 or less.

According to such a configuration, even under a relatively severe condition in which the defect rate of the separation layer 3 is 0.01%, the influence of the defect rate can be prevented from becoming apparent in the gas selectivity ratio R_{CO2}/R₀.

The gas selectivity ratio R_{CO2}/R₀ is preferably 90 or more and less than 100, and the gas permeability ratio B_{CO2}/A_{CO2} is preferably 5.3 or more and 19.0 or less.

According to such a configuration, even under a relatively severe condition in which the defect rate of the separation layer 3 is 0.01%, the influence of the defect rate can be prevented from becoming apparent in the gas selectivity ratio R_{CO2}/R₀.

The non-target component is preferably nitrogen.

According to such a configuration, the gas separation membrane 1 suitable for a technique of separating and collecting carbon dioxide contained in the atmosphere (direct air collection (DAC)) can be obtained.

Although the gas separation membrane according to the present disclosure has been described based on the preferred embodiment, the present disclosure is not limited thereto.

For example, in the gas separation membrane according to the present disclosure, each part of the embodiments described above may be replaced with a component having a similar function, or any component may be added to the embodiments described above.

### Examples

Next, specific examples according to the present disclosure will be described.

### 6. Preparation of Gas Separation Membrane

### 6.1. Sample No. 1

First, an organopolysiloxane was deposited, by a plasma polymerization method, on one surface of a porous layer formed of alumina (Al₂O₃). Thus, a separation layer was obtained. Octamethyltrisiloxane was used as a raw material gas, and a constituent material of the obtained separation layer was an organopolysiloxane (OPS). A defect rate (an area rate of a through hole) of the separation layer was 0.01%, and a porosity of the porous layer was 50%. A configuration of the gas separation membrane is as shown in Table 1.

### 6.2. Sample Nos. 2 to 18

Gas separation membranes were produced in the same manner as in the case of Sample No. 1 except that configurations of the gas separation membranes were changed as shown in Table 1.

### 6.3. Sample No. 19

A gas separation membrane was produced in the same manner as in the case of Sample No. 1 except that a configuration of the gas separation membrane was changed as shown in Table 2. A method for producing the gas separation membrane of Sample No. 19 is as follows.

First, an organopolysiloxane was deposited, by a plasma polymerization method, on one surface of a porous layer formed of alumina. Thus, an intermediate layer was obtained. Octamethyltrisiloxane was used as a raw material gas.

Next, an organopolysiloxane was deposited, by a plasma polymerization method, on one surface of a water-soluble film as a sacrificial layer. Thus, a separation layer was obtained. Octamethyltrisiloxane was used as a raw material gas.

Next, the intermediate layer and the separation layer were each subjected to an activation treatment of irradiating the intermediate layer and the separation layer with ultraviolet rays. Subsequently, activated surfaces were overlapped so as to be in contact with each other, and pressure was applied while heating. Thus, a gas separation membrane was obtained.

### 6.4. Sample Nos. 20 to 23

Gas separation membranes were produced in the same manner as in the case of Sample No. 19 except that configurations of the gas separation membranes were changed as shown in Table 2.

In Tables 1 and 2, the gas separation membrane corresponding to the present disclosure is indicated as "Example", and the gas separation membrane not corresponding to the present disclosure is indicated as "Comparative Example".

### 7. Evaluation of Gas Separation Membrane

The gas separation membranes of each Example and each Comparative Example were evaluated as follows.

### 7.1. Gas Selectivity ratio R_{CO2}/R₀ and Arrival Rate to Ideal Value

The gas separation membranes of each Example and each Comparative Example were cut into a circle having a diameter of 5 cm to prepare test samples. Next, using a gas permeability measuring device, a mixed gas obtained by mixing carbon dioxide:nitrogen at a volume ratio of 13:87 was supplied upstream of the test samples. A total upstream pressure was adjusted to 5 MPa, a partial pressure of carbon dioxide was adjusted to 0.65 MPa, a flow rate was adjusted to 500 mL/min, and a temperature was adjusted to 40°C. A gas component that permeated through the test sample was analyzed by gas chromatography.

Next, the gas permeability R_{CO2} of carbon dioxide and the gas permeability R_{N2} of nitrogen in the gas separation membrane were obtained from the analysis results, and a "ratio R_{CO2}/R_{N2}" was calculated as the gas selectivity ratio R_{CO2}/R₀. An arrival rate to the ideal value of the calculated gas selectivity ratio R_{CO2}/R₀ was also calculated. The calculation results are shown in Tables 1 and 2.

### 7.2. Mechanical Characteristic

The gas separation membranes of each Example and each Comparative Example were bent into a bellows shape, and then the bent gas separation membranes were stretched. After the operation was repeated 10 times, the gas separation membranes were cut into a circular shape having a diameter of 5 cm to prepare test samples.

Next, a gas selectivity ratio R_{CO2}/R₀ of the test sample was calculated by the same method as in 7.1. Then, a difference between the gas selectivity ratio R_{CO2}/R₀ before the bending test was performed and the gas selectivity ratio R_{CO2}/R₀ after the bending test was performed was calculated as a decrease width of the gas selectivity ratio R_{CO2}/R₀. The decrease width is an index quantitatively representing a degree of deterioration in gas selectivity ratio R_{CO2}/R₀ due to the bending test. The mechanical characteristics of the gas separation membrane were relatively evaluated by comparing the calculated decrease width with the following evaluation criteria. The evaluation results are shown in Tables 1 and 2.
A: The decrease width of the gas selectivity ratio R_{CO2}/R₀ is small (less than 3)
B: The decrease width of the gas selectivity ratio R_{CO2}/R₀ is moderate (3 or more and less than 6)
C: The decrease width of the gas selectivity ratio R_{CO2}/R₀ is large (6 or more)

### Table 1

**Table 1**

| Sample No. | Classification | Configuration of gas separation membrane | | | | | | | Evaluation result of cas separation membrane | | | |
|---|---|---|---|---|---|---|---|---|---|---|---|---|
| | | Separation layer | | | Porous laver | | Thickness ratio | gas permeability ratio B_{CO2}/A_{CO2} | gas selectivity ratio R_{CO2}/R₀ | Ideal value | Arrival rate to ideal value | Mechanical characteristic |
| | | Constituent material | Average thickness | Area rate of through hole | Constituent material | Average thickness | | | | | | |
| | | - | nm | - | - | µm | % | - | - | - | - | - |
| 1 | Comparative Example | OPS | 200 | 0.010 | Alumina | 20 | 1.000 | 3.0 | 14 | 20 | 0.70 | B |
| 2 | Examples | OPS | 100 | 0.10 | Alumina | 20 | 0.500 | 7.0 | 15 | 20 | 0.75 | B |
| 3 | Examples | OPS | 200 | 0.010 | Alumina | 20 | 1.000 | 30.0 | 18 | 20 | 0.90 | B |
| 4 | Examples | OPS | 300 | 0.0090 | Alumina | 30 | 1.000 | 120.0 | 19 | 20 | 0.95 | B |
| 5 | Comparative Example | OPS | 200 | 0.050 | Alumina | 20 | 1.000 | 150.0 | 12 | 20 | 0.60 | B |
| 6 | Examples | OPS | 100 | 0.0071 | Alumina | 30 | 0.333 | 8.0 | 24 | 30 | 0.80 | B |
| 7 | Examples | OPS | 200 | 0.0063 | Alumina | 30 | 0.667 | 25.0 | 27 | 30 | 0.90 | B |
| 8 | Examples | OPS | 300 | 0.0059 | Alumina | 30 | 1.000 | 80.0 | 29 | 30 | 0.97 | B |
| 9 | Examples | OPS | 200 | 0.0074 | Alumina | 30 | 0.667 | 100.0 | 23 | 30 | 0.77 | B |
| 10 | Examples | OPS | 100 | 0.0057 | Alumina | 50 | 0.200 | 5.0 | 30 | 40 | 0.75 | B |
| 11 | Examples | OPS | 200 | 0.0049 | Alumina | 50 | 0.400 | 30.0 | 35 | 40 | 0.88 | B |
| 12 | Examples | OPS | 300 | 0.0045 | Alumina | 50 | 0.600 | 55.0 | 38 | 40 | 0.95 | B |
| 13 | Examples | OPS | 100 | 0.0045 | Alumina | 70 | 0.143 | 5.0 | 38 | 50 | 0.76 | B |
| 14 | Examples | OPS | 200 | 0.0040 | Alumina | 70 | 0.286 | 23.0 | 43 | 50 | 0.86 | B |
| 15 | Examples | OPS | 300 | 0.0036 | Alumina | 70 | 0.429 | 44.0 | 48 | 50 | 0.96 | B |
| 16 | Examples | OPS | 100 | 0.0023 | Alumina | 90 | 0.111 | 9.0 | 75 | 100 | 0.75 | B |
| 17 | Examples | OPS | 200 | 0.0021 | Alumina | 90 | 0.222 | 10.0 | 82 | 100 | 0.82 | B |
| 18 | Examples | OPS | 300 | 0.0018 | Alumina | 90 | 0.333 | 19.0 | 93 | 100 | 0.93 | B |

### Table 2

**Table 2**

| Sample No. | Classification | Configuration of gas separation membrane | | | | | | | | Evaluation result of cas separation membrane | | | |
|---|---|---|---|---|---|---|---|---|---|---|---|---|---|
| | | Separation laver | | | Intermediate laver | | Porous laver | | gas permeability ratio B_{CO2}/A_{CO2} | gas selectivity ratio R_{CO2}/R₀ | Ideal value | Arrival rate to ideal value | Mechanical characteristic |
| | | Constituent material | Average thickness | Area rate of through hole | Constituent material | Average thickness | Constituent material | Average thickness | | | | | |
| | | - | nm | - | - | nm | - | µm | - | - | - | - | - |
| 19 | Comparative Example | OPS | 200 | 0.015 | OPS | 20 | Alumina | 20 | 3.0 | 14 | 20 | 0.70 | A |
| 20 | Examples | OPS | 100 | 0.11 | OPS | 20 | Alumina | 20 | 7.0 | 15 | 20 | 0.75 | A |
| 21 | Examples | OPS | 200 | 0.015 | OPS | 20 | Alumina | 20 | 30.0 | 18 | 20 | 0.90 | A |
| 22 | Examples | OPS | 300 | 0.011 | OPS | 20 | Alumina | 20 | 120.0 | 19 | 20 | 0.95 | A |
| 23 | Comparative Example | OPS | 200 | 0.050 | OPS | 20 | Alumina | 20 | 150.0 | 12 | 20 | 0.60 | A |

As is clear from Tables 1 and 2, the gas separation membranes of Examples had an arrival rate to the ideal value of the gas selectivity ratio R_{CO2}/R₀ that is higher than that of the gas separation membranes of Comparative Examples. It was confirmed that, in Examples, the arrival rate can be increased by optimizing the gas permeability ratio B_{CO2}/A_{CO2}. Further, since each gas separation membrane had a composite membrane structure, mechanical characteristics were good. It has been found that the mechanical characteristics can be particularly improved when an intermediate layer is interposed.

## Claims

1. A gas separation membrane for separating carbon dioxide from a mixed gas containing the carbon dioxide and a non-target component, the gas separation membrane comprising:
a porous layer; and
a separation layer formed of a polymer material and in close contact with one surface of the porous layer, wherein
a gas selectivity ratio R_{CO2}/R₀ is 8 or more and less than 100, where R₀ is a gas permeability of the non-target component in the gas separation membrane and R_{CO2} is a gas permeability of the carbon dioxide in the gas separation membrane, and
a gas permeability ratio B_{CO2}/A_{CO2} is 4.0 or more and 128.0 or less, where A_{CO2} is a gas permeability of the carbon dioxide in the separation layer and B_{CO2} is a gas permeability of the carbon dioxide in the porous layer.

2. The gas separation membrane according to claim 1, wherein
the polymer material contains an organopolysiloxane, and
an average thickness of the separation layer is 10 nm or more and 800 nm or less.

3. The gas separation membrane according to claim 1, wherein
an area rate of a through hole penetrating the separation layer is more than 0% and 0.05% or less.

4. The gas separation membrane according to claim 3, wherein
the gas selectivity ratio R_{CO2}/R₀ is 20 or more and less than 30, and
the gas permeability ratio B_{CO2}/A_{CO2} is 4.1 or more and 81.0 or less.

5. The gas separation membrane according to claim 3, wherein
the gas selectivity ratio R_{CO2}/R₀ is 30 or more and less than 40, and
the gas permeability ratio B_{CO2}/A_{CO2} is 4.3 or more and 59.0 or less.

6. The gas separation membrane according to claim 3, wherein
the gas selectivity ratio R_{CO2}/R₀ is 40 or more and less than 50, and
the gas permeability ratio B_{CO2}/A_{CO2} is 4.4 or more and 45.0 or less.

7. The gas separation membrane according to claim 3, wherein
the gas selectivity ratio R_{CO2}/R₀ is 50 or more and less than 60, and
the gas permeability ratio B_{CO2}/A_{CO2} is 4.5 or more and 37.0 or less.

8. The gas separation membrane according to claim 3, wherein
the gas selectivity ratio R_{CO2}/R₀ is 60 or more and less than 70, and
the gas permeability ratio B_{CO2}/A_{CO2} is 4.7 or more and 30.0 or less.

9. The gas separation membrane according to claim 3, wherein
the gas selectivity ratio R_{CO2}/R₀ is 70 or more and less than 80, and
the gas permeability ratio B_{CO2}/A_{CO2} is 4.9 or more and 25.0 or less.

10. The gas separation membrane according to claim 3, wherein
the gas selectivity ratio R_{CO2}/R₀ is 80 or more and less than 90, and
the gas permeability ratio B_{CO2}/A_{CO2} is 5.1 or more and 22.0 or less.

11. The gas separation membrane according to claim 3, wherein
the gas selectivity ratio R_{CO2}/R₀ is 90 or more and less than 100, and
the gas permeability ratio B_{CO2}/A_{CO2} is 5.3 or more and 19.0 or less.

12. The gas separation membrane according to claim 1, wherein
the non-target component is nitrogen.
